# FASCICULE DE BREVET EUROPEEN

(11) **EP 2 137 494 B1**
(45) Date de publication et mention de la délivrance du brevet: **04.05.2011**
(21) Numéro de dépôt: 08787868.2
(22) Date de dépôt: 28.03.2008
(51) Int. Cl.: G01C 23/00, H04L 29/08

(54) **SYSTÈME DE COMMUNICATION D'AÉRONEF COMPRENANT UN TERMINAL D'AÉRONEF ET UNE RESSOURCE PORTABLE**
FLUGZEUGKOMMUNIKATIONSSYSTEM MIT EINEM FLUGZEUG-ENDGERÄT UND EINER TRAGBAREN RESSOURCE
AIRCRAFT COMMUNICATION SYSTEM INCLUDING AN AIRCRAFT TERMINAL AND A PORTABLE RESOURCE

(30) Priorité: 30.03.2007 FR 0754189
(43) Date de publication de la demande: 30.12.2009
(73) Titulaire: Airbus, 31700 Blagnac (FR)
(72) Inventeur: SAUGNAC, Frédéric, F-31400 Toulouse (FR)
(74) Mandataire: Le Tourneau, Augustin
(86) Numéro de dépôt international: PCT/FR2008/000428
(87) Numéro de publication internationale: WO 2008/142240

(56) Documents cités:
- EP-A- 1 726 918
- US-A1- 2003 142 089
- US-A1- 2007 055 416
- US-B1- 6 401 013
- FREDRIC S FITZSIMMONS: "The electronic flight bag: a multi-function tool for the modern cockpit" INTERNET CITATION, [Online] août 2002 (2002-08), XP002436744 Extrait de l'Internet: URL:http://www.usafa.af.mil/df/iita/Docume nts/EFBRevised%20copyright.pdf> [extrait le 2007]
- RICHARDSON ET AL: "Virtual Network Computing" IEEE INTERNET COMPUTING, IEEE SERVICE CENTER, NEW YORK, NY, US, vol. 2, no. 1, janvier 1998 (1998-01), pages 33-38, XP002142727 ISSN: 1089-7801

## Description

La présente invention concerne un système de communication d'aéronef, notamment dans un aéronef, comprenant un terminal d'aéronef et une ressource portable, un terminal d'aéronef et le procédé de communication associé.

Un pilote d'avion souhaite pouvoir utiliser son ordinateur portable, ses données ou applications aussi bien dans l'avion durant les différentes phases de vol qu'au sol pour sa formation ou pour les mises à jour des données de vol juste avant le vol.

Ainsi, dans un avion, l'équipage, notamment le pilote, peut utiliser des applications installées sur le terminal de bord (qui équipe classiquement le cockpit) ou sur son ordinateur portable. Ces derniers peuvent être connectés aux ressources de l'avion, notamment à un écran et un clavier dans le cockpit, à une alimentation et le bus de transmission de données avion via un connecteur universel ou un connecteur hardware spécifique.

Toutefois, cette solution présente un certain nombre d'inconvénients. En effet, ce connecteur doit fonctionner pour tout type de ressources à connecter à l'avion, notamment le terminal de bord, l'ordinateur portable du pilote et plus particulièrement le bus de transmission des données avion. De plus, cette solution peut poser des problèmes de sécurité quant aux données.

En outre, ce connecteur doit être implanté par l'ensemble des fabricants de ressources (notamment les fabricants d'ordinateurs, d'ordinateurs portables).

De plus, cette solution présente l'inconvénient que le connecteur doit être standardisé.

Selon une autre approche, il est installé dans le cockpit de l'avion une station d'accueil (« *docking station* » en terminologie anglo-saxonne) apte à recevoir un ordinateur portable. Cette station d'accueil est un connecteur matériel en liaison avec des moyens d'entrée 1 sortie qui forment une interface avec le pilote, dans le cockpit. En outre, la station d'accueil est connectée via une connexion aux unités fonctionnelles remplaçables LRU (« *Line Replaceable Unit* » en terminologie anglo-saxonne), cette connexion étant notamment, par exemple, un bus ARINC 429.

Toutefois, selon cette approche, il est à noter que la station d'accueil n'est apte à accueillir qu'un seul modèle d'ordinateur portable. En effet, à chaque marque d'ordinateur, et quelquefois à des types différents d'ordinateurs, une station d'accueil spécifique lui est propre.

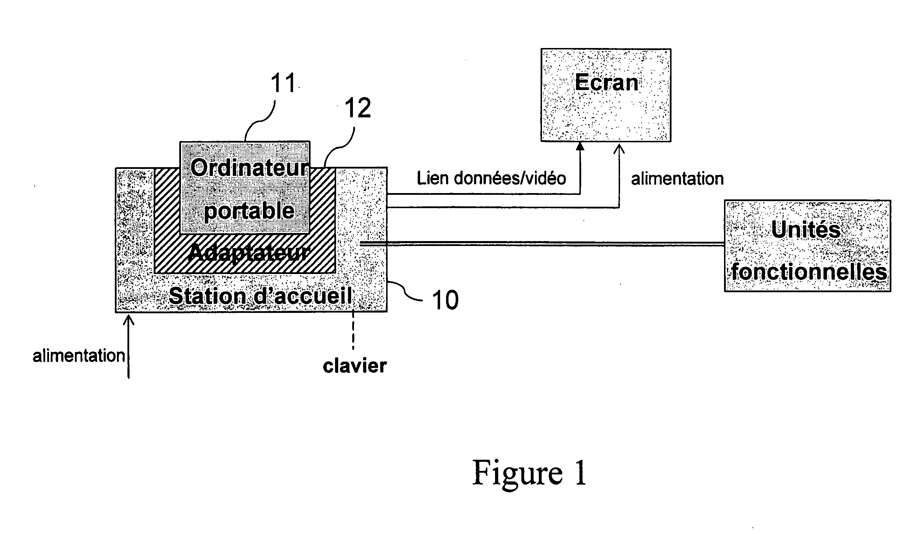

Afin de s'affranchir de cet inconvénient, selon une approche illustrée en Figure 1, il est fixé dans le cockpit de l'avion une station d'accueil générique 10. Puis pour chaque modèle d'ordinateur portable utilisé par les pilotes, il est fabriqué un adaptateur 12 apte à accueillir l'ordinateur portable 11 et apte à s'insérer dans la station d'accueil installée dans le cockpit.

Toutefois, cette solution présente l'inconvénient de devoir développer des adaptateurs pour les différents ordinateurs portables utilisés par les pilotes.

On connaît également la publication US 2007/055,416 décrivant un système EFB embarqué relié aux systèmes avioniques et auquel peuvent être connectées des entités EFB portables, via un routeur. Le système EFB et les entités EFB portables établissent entre eux une connexion sécurisée pour assurer des communications application vers application.

La présente invention a pour premier objet de remédier à au moins un des inconvénients des techniques et processus de l'art antérieur précités. Pour ce faire, l'invention propose notamment un système de communication permettant d'utiliser une ressource portable distante et présentant l'avantage notamment pour un utilisateur d'utiliser aussi bien le terminal existant dans un équipement que sa ressource portable. L'équipement est par exemple inclus dans un aéronef.

L'invention a également pour objet de tirer profit d'un terminal existant embarqué dans l'aéronef pour favoriser l'interactivité avec la ressource portable ainsi que la sécurité de l'ensemble informatique.

L'invention a ainsi pour objet un système de communication tel que défini dans la revendication 1,

Le système selon l'invention permet ainsi d'utiliser une ressource portable via un terminal d'aéronef en utilisant les unités d'entrée / sortie reliées au terminal d'aéronef, notamment le clavier et/ou le système de désignation (par exemple l'équipement de pointage, la souris), la ressource portable et le terminal d'aéronef étant connectés, par exemple, par une connexion Ethernet ou par une connexion USB.

De cette manière, il est rendu possible d'utiliser tout type de ressource portable connectée au terminal d'aéronef ainsi que le terminal d'aéronef, sans nécessiter d'adaptation matérielle pour l'utilisation de la ressource portable.

En outre, le terminal d'aéronef via des commandes provenant de l'unité d'entrée / sortie, par exemple le clavier relié au terminal d'aéronef, permet d'exécuter une application mémorisée et installée sur la ressource portable, en utilisant ses ressources de traitement notamment son unité d'exécution.

Selon cette disposition de l'invention, on optimise la relation entre le terminal d'aéronef et la ressource portable en minimisant l'utilisation de la liaison entre eux deux. Ainsi, la sécurité informatique est accrue tandis que l'interactivité avec l'application exécutée est forte.

Selon un mode de réalisation particulier, la ressource portable est un ordinateur portable.

Selon un autre mode de réalisation, la ressource portable est un dispositif mémoire.

En particulier, le dispositif mémoire comprend un système d'exploitation.

L'invention concerne également un aéronef comprenant un système de communication d'aéronef conformément à l'invention.

L'aéronef présente les mêmes avantages que le système de communication d'aéronef brièvement décrit ci-dessus et ils ne seront donc pas rappelés ici.

L'invention vise également un terminal d'aéronef tel que défini dans la revendication 7.

Le terminal présente les mêmes avantages que le système de communication d'aéronef brièvement décrit ci-dessus et ils ne seront donc pas rappelés ici.

D'autres avantages, buts et caractéristiques de la présente invention ressortent de la description détaillée qui suit, faite à titre d'exemple non limitatif, au regard des dessins annexes dans lesquels ;
- la figure 1 représente une station d'accueil d'un ordinateur portable avec adaptateur ;
- la figure 2 illustre un système de communication entre un terminal de bord et une ressource portable distante conformément à l'invention ;
- la figure 3 illustre un système de communication dans un cockpit d'avion conformément à l'invention ;
- la figure 4 illustre un premier mode de mise en oeuvre de l'invention à savoir l'affichage distant ; et
- la figure 5 illustre un second mode de mise en oeuvre de l'invention à savoir le stockage distant.

Conformément à l'invention, une même ressource portable, telle que par exemple un ordinateur portable ou un support mémoire portable, peut être utilisé dans un équipement, notamment dans un avion et en dehors de l'équipement. En effet, dans un avion, l'équipage, notamment le pilote, peut utiliser des applications installées soit sur le terminal de bord, aussi appelé terminal d'aéronef soit sur une ressource portable, par exemple, son ordinateur portable ou son support mémoire portable. Pour ce faire, la ressource portable est connectée notamment au terminal de bord de sorte que cette ressource portable soit accessible à distance. Le terminal de bord est en outre connecté à un bus, notamment au bus ARINC 429 ou Ethernet du réseau avionique de l'avion de sorte à avoir accès aux données avion, et à une unité d'entrée / sortie, à savoir par exemple une unité d'affichage et un clavier positionnés dans le cockpit de l'avion. Ainsi, durant le vol, la ressource portable est fixée par exemple dans le cockpit de l'avion et est connectée aux ressources de l'avion. Ainsi, l'équipage de bord, notamment le pilote, est apte à utiliser les applications et les données contenues dans cette ressource portable via le terminal de bord durant l'ensemble des phases de vol. Au sol, le pilote est également capable d'utiliser les applications et les données de la ressource portable.

Ainsi, pour ce faire, le système, conformément à l'invention, s'appuie sur une ressource portable distante connectée au terminal de bord par une connexion réseau, notamment une connexion Ethernet ou une connexion USB. Les applications ou les données contenues dans la ressource portable distante sont utilisées via le terminal de bord de l'avion, notamment en utilisant une technologie d'affichage déportée basée par exemple sur une architecture client -serveur.

Le terminal de bord et le clavier forment notamment le terminal d'information de bord de l'avion OIT (« *Onboard Information Terminal* » en terminologie anglo-saxonne).

Il est à noter qu'une connexion Ethernet et une connexion USB utilisent des connecteurs standards existant.

En outre, conformément à l'invention, la ressource portable distante peut être installée dans un rangement existant ne nécessitant que peu d'adaptation. En effet, il peut être nécessaire de fixer la ressource portable, notamment au moyen de mousses et de sangles.

La ressource portable distante peut utiliser une interface logicielle définie SIS (« *System Interface Specification* » en terminologie anglo-saxonne) de sorte que toute application conforme à cette interface peut être intégrée.

Cette interface logicielle permet aux applications d'être utilisée à partir de la structure installée dans l'avion.

Une autre interface logicielle permet également de mettre à disposition des applications installées sur la ressource portable distante, les données avion collectées concernant l'avion.

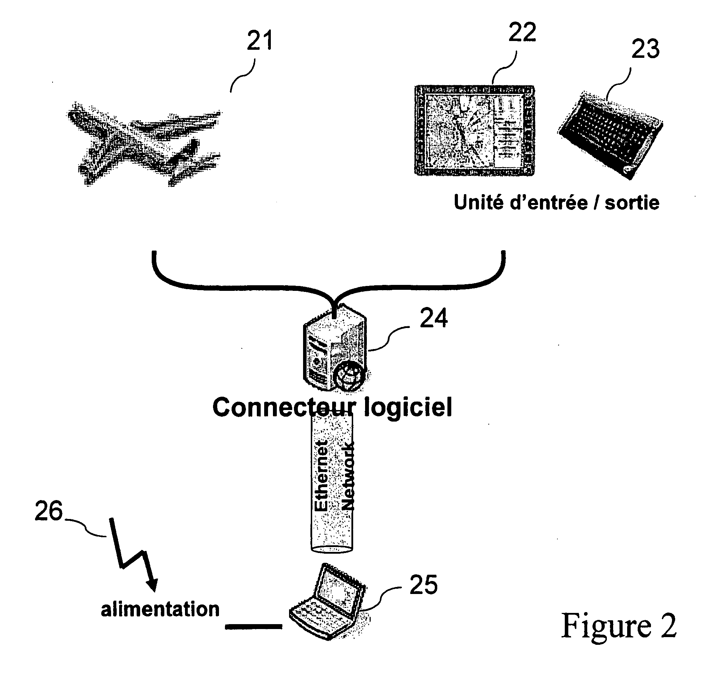

Il est maintenant décrit, en référence à la Figure 2, un mode de réalisation d'un système de communication dans un avion entre un terminal de bord et une ressource portable distante conformément à l'invention.

Selon ce mode de réalisation, d'une part, les différents éléments de l'avion 21, notamment les données de l'avion et la connectivité de l'avion, et d'autre part, l'unité d'affichage 22 et le clavier 23 sont reliés à un terminal de bord 24 apte à réaliser un connecteur, notamment un connecteur logiciel; en vue de sa connexion avec une ressource portable distante 25 alimentée au moyen d'une prise d'alimentation 26.

La ressource portable distante est notamment un ordinateur portable, une unité de stockage, telle qu'un disque dur, une mémoire Flash, une mémoire équipée d'un système d'exploitation simplifié telle qu'une clé USB « Bootable » c'est-à-dire apte à être démarrée, etc.

Ce connecteur permet à la ressource portable distante d'accéder, via la liaison réseau, notamment la liaison Ethernet, aux données avion, aux signaux discrets (par exemple le statut des documents de travail (EFB)) et à tous les services de l'avion (port USB par exemple) disponibles, au moyen d'une mise en correspondance de ports (« port mapping » en terminologie anglo-saxonne).

Ainsi, les applications concernant les documents de travail (EFB) sont aptes à être affichées sur l'unité d'affichage 22.

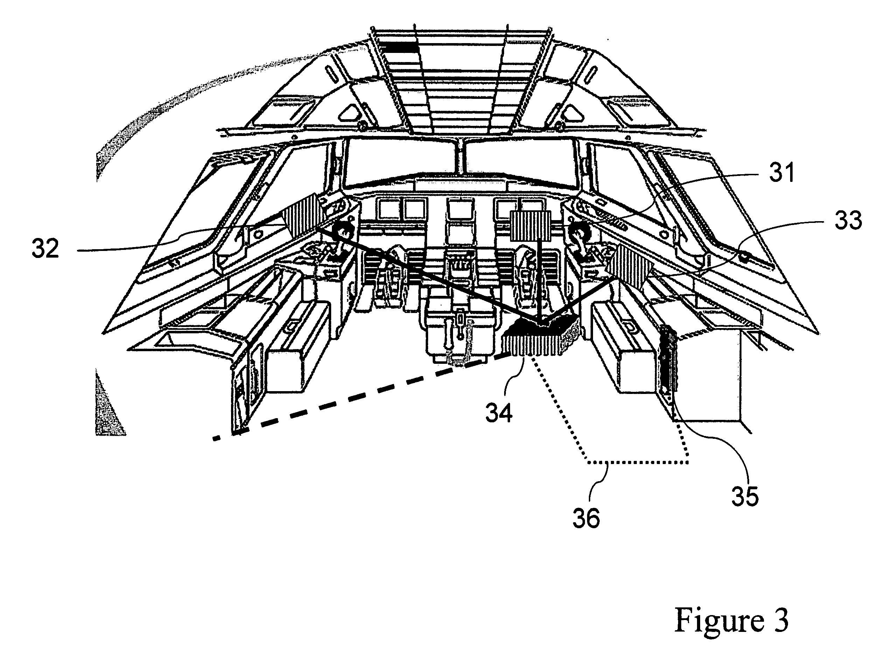

La Figure 3 illustre une installation matérielle d'un tel système dans le cockpit d'un avion.

Ainsi, différentes unités d'affichage 31, 32, 33 sont connectées au terminal de bord 34 apte à réaliser le connecteur logiciel. A ce terminal de bord, est par exemple connecté le réseau avionique au moyen d'un bus ARINC 429 afin de recevoir les données avion.

En outre, la ressource portable distante 35 est connectée au terminal de bord 34 au moyen d'une connexion 36, notamment d'une connexion Ethernet.

Selon un premier mode de réalisation particulier, la ressource portable distante est connectée au terminal de bord et un ordinateur réseau virtuel est mis en oeuvre entre le terminal de bord et la ressource portable distante. Selon de mode de réalisation, les entrées / sorties de la ressource portable distante sont celles de l'avion, à savoir les écrans et claviers du cockpit de l'avion. Ce mode de réalisation est appelé affichage distant (« *Remote display* » en terminologie anglo-saxonne).

Différents protocoles technologiques de créations d'ordinateur réseau « virtuel » peuvent être utilisés tels que les ordinateurs de type VNC (« *Virtual Network Computing* » en terminologie anglo-saxonne) ou encore les serveurs de type « MS terminal server ».

Par ailleurs, le terminal de bord et la ressource portable distantes étant connectés par des technologies, par exemple de type client - serveur réseaux, les systèmes d'exploitation des deux ressources sont indépendants. De cette manière, les systèmes d'exploitation s'exécutant sur le terminal de bord et sur la ressource portable distante peuvent être différents. Par exemple, la ressource portable distante peut avoir un système d'exploitation de type Windows (marque déposée) et le terminal de bord peut avoir un système d'exploitation différent, à savoir par exemple un système de type Linux.

Selon un second mode de réalisation particulier, la ressource portable distante, connectée au terminal de bord, met à disposition un répertoire afin de permettre au terminal de bord d'exécuter des applications localement par lui-même, les applications et / ou les données sont mémorisées sur la ressource portable distante. Ce mode de réalisation est appelé stockage distant (« *Remote Hard Disk* » en terminologie anglo-saxonne).

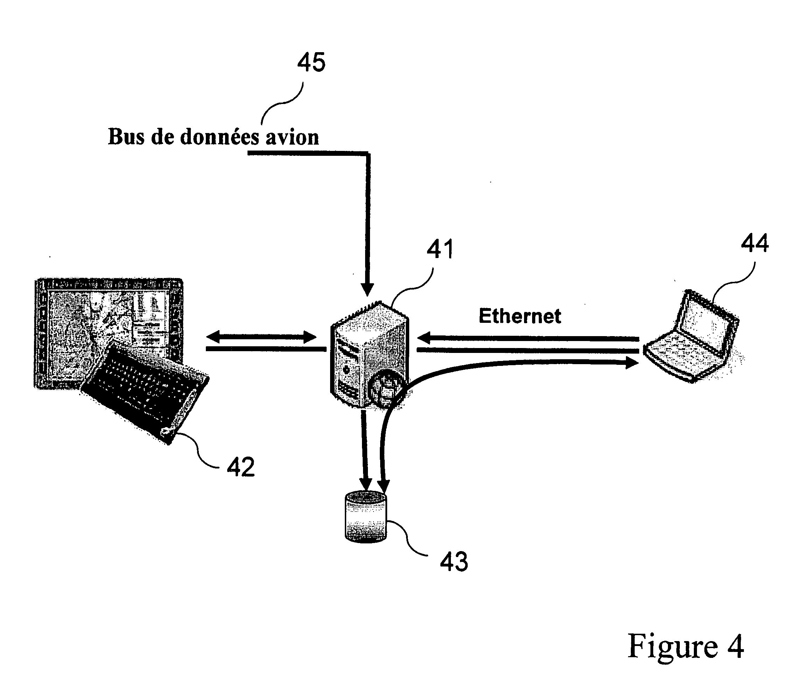

La Figure 4 illustre le premier mode de réalisation particulier à savoir l'affichage distant.

Il est illustré un terminal de bord 41 sur lequel sont connectés au moins une unité d'affichage et au moins un clavier 42 installés dans le cockpit de l'avion.

A ce terminal de bord, est également connectée une base de données 43 apte à mémoriser les données de l'avion.

En outre, conformément à l'invention, une ressource portable distante 44 est connectée, notamment au moyen d'une connexion Ethernet au terminal de bord 41 selon une architecture client - serveur.

De plus, un bus 45 transportant les données avion, notamment un bus ARINC 429, peut être connecté au terminal de bord 41 au moyen de connexion en lecture seul et non temps réel. Cette connexion permet au terminal de bord de collecter des informations, notamment, sur le fonctionnement des unités fonctionnelles de l'avion. Ces données sont mémorisées dans la base de données avion 43.

Selon ce mode de réalisation, la ressource portable distante est connectée au moyen d'une connexion Ethernet au terminal de bord 41.

Selon un mode de réalisation particulier, la ressource portable distante est un serveur du réseau virtuel (« *server VNC* » en terminologie anglo-saxonne) et le terminal de bord est un client du réseau virtuel (« *client VNC* » en terminologie anglo-saxonne).

Selon ce mode de réalisation, les utilisateurs accèdent à la ressource portable distante comme si cette ressource était locale. Aussi, l'unité de traitement utilisée, notamment le processeur, la mémoire physique, la mémoire de masse, est celui de la ressource portable distante.

L'application s'exécutant sur la ressource portable distante 44 utilise les ressources locales de l'avion pour l'interface homme-machine, notamment l'unité d'entrée / sortie par exemple l'unité d'affichage 42, le clavier, via le terminal de bord 41. Pour ce faire, le terminal de bord gère un afficheur tel que celui-ci affiche l'application s'exécutant sur la ressource portable distante.

Le mode de réalisation "affichage distant" décrit ici répond à la problématique de mobilité posée par l'utilisation de l'électronique de l'avion dans les opérations d'un avion. La mobilité étant indispensable pour les mises à jour de données, par exemple avant le départ de l'avion (météo, changement d'équipage). Ce besoin de mobilité nécessite un système portable, disponible pendant toutes les phases de vol, qui accède aux données avionique, notamment en lecture seule, et qui soit fixé dans l'avion.

En outre, le terminal de bord 41 comprend des moyens de réception de données de l'unité 42, notamment du clavier et des moyens de transmission de ces données vers la ressource portable distante, et des moyens de réception de données de la ressource portable distante et des moyens de transmission de ces données vers l'unité 42, notamment l'affichage.

Pour ce faire, il est connecté les ports actifs d'entrée / sortie du terminal de bord notamment de l'unité d'entrée / sortie avec les ports de la ressource portable distante notamment en effectuant des changements d'adressage.

Pour mettre en oeuvre ce mode de réalisation, dans le terminal de bord et dans la ressource portable distante est installé un logiciel par exemple de type Linux jouant le rôle respectivement de client et de serveur

En outre, selon cette architecture, les applications s'exécutant sur la ressource portable distante peuvent accéder à la base de données avion 43.

En effet, l'accès aux paramètres avioniques est réalisé par le terminal de bord, puis transféré aux applications de la ressource portable distante par la correspondance de ports de la même façon que pour l'écran ou le clavier. Pour ce faire, une application serveur s'exécute sur le terminal de bord pour fournir les données avioniques à la ressource portable distante.

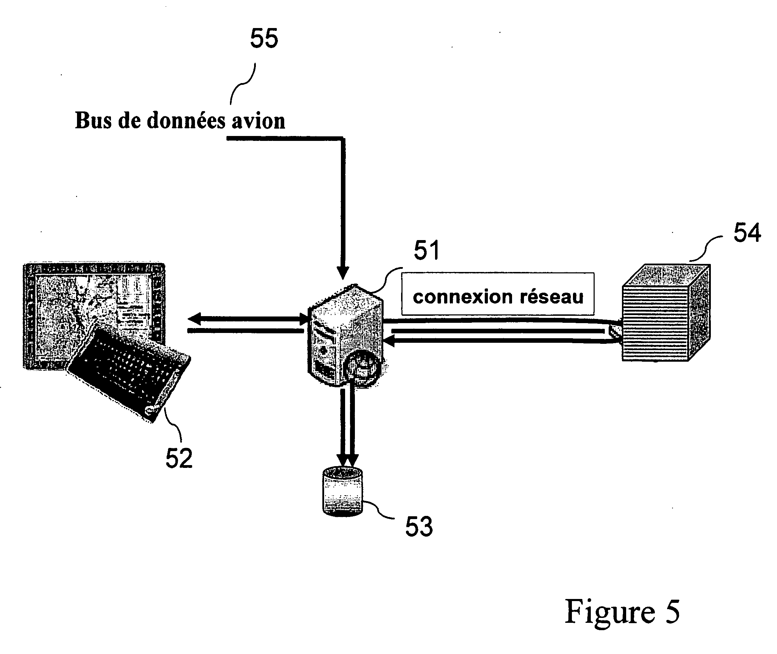

Il est maintenant décrit le second mode de réalisation particulier, en référence à la figure 5, à savoir le stockage distant.

Il est illustré un terminal de bord 51 sur lequel sont connectés au moins une unité d'affichage et au moins un clavier 52 installés dans le cockpit de l'avion.

A ce terminal de bord, est également connectée une base de données 53 apte à mémoriser les données de l'avion.

En outre, conformément à l'invention, une ressource portable distante 54 est connectée, notamment au moyen d'une connexion Ethernet au terminal de bord 51.

De plus, un bus 55 transportant les données avion, notamment un bus ARINC 429, peut être connecté au terminal de bord 51 au moyen de connexion en lecture seul et non temps réel. Cette connexion permet au terminal de bord de collecter des informations, notamment, sur le fonctionnement des unités fonctionnelles de l'avion. Ces données sont mémorisées dans la base de données avion 53.

Selon cette architecture, la ressource portable distante 54 est un serveur du fichier (« file server » en terminologie anglo-saxonne) dans lequel sont mémorisées des applications et des données. Pour ce faire, la ressource portable distante comprend au moins une unité de mémorisation qui forme un répertoire partagé et des moyens de mise à disposition du répertoire partagé.

Selon un mode de réalisation particulier, la ressource portable distante 54 est un ordinateur portable mettant à disposition au terminal de bord 51, tout ou partie de la mémoire de stockage contenu dans l'ordinateur portable.

Selon un autre mode de réalisation particulier, la ressource portable distante 54 est un support de mémorisation tel qu'un disque dur ou une mémoire Flash.

Dans le mode de réalisation du stockage distant, les applications installées sur le répertoire partagé de la ressource portable distante sont exécutées sur le terminal de bord, notamment en utilisant le processeur de celui-ci. Pour ce faire, le terminal de bord comprend des moyens d'accès aptes à accéder au répertoire partagé de la ressource portable distante.

Toutefois, ces applications sont exécutées par l'unité de traitement du terminal de bord 51, notamment par le processeur du terminal de bord. L'affichage de l'exécution de l'application mémorisée sur la ressource portable distante est également géré par le terminal de bord.

En outre, selon cette architecture, le terminal de bord 51 peut accéder à la base de données avion 53.

## Revendications

1. Système de communication dans un aéronef (21), le système comprenant un terminal d'aéronef (24, 34, 51) relié à au moins une unité d'entrée / sortie (22, 23, 31, 32, 33, 52) et à un réseau avionique (55) de l'aéronef et comprenant une ressource portable (25, 35, 54) connectée au terminal d'aéronef par une connexion réseau (36), ladite au moins une unité d'entrée / sortie étant apte à interagir avec l'ensemble formé par le terminal d'aéronef et la ressource portable, **caractérisé en ce que** le terminal d'aéronef est configuré pour accéder à au moins une unité de mémorisation de la ressource portable et comprend des moyens d'exécution configurés pour exécuter au moins une application mémorisée dans l'unité de mémorisation de la ressource portable.

2. Système selon la revendication 1, **caractérisé en ce que** la connexion réseau entre le terminal d'aéronef et la ressource portable est une connexion Ethernet.

3. Système selon la revendication 1, **caractérisé en ce que** la connexion réseau entre le terminal d'aéronef et la ressource portable est une connexion USB.

4. Système selon l'une des revendications 1 à 3, **caractérisé en ce que** ladite ressource portable est un ordinateur portable mettant à disposition audit terminal d'aéronef, tout ou partie de la mémoire de stockage contenu dans l'ordinateur portable.

5. Système selon l'une des revendications 1 à 3, **caractérisé en ce que** ladite ressource portable est un support de mémorisation.

6. Aéronef comprenant un système de communication selon l'une quelconque des revendications 1 à 5.

7. Terminal d'aéronef (24, 34, 51) relié à au moins une unité d'entrée / sortie (22, 23, 31, 32, 33, 52) et à un réseau avionique (55) d'un aéronef (21) comprenant un moyen de connexion réseau (36) apte à connecter une ressource portable (25, 35, 54), ladite au moins une unité d'entrée / sortie étant apte à interagir avec l'ensemble formé par le terminal d'aéronef et la ressource portable, **caractérisé en ce que** le terminal d'aéronef comprend des moyens d'accès configurés pour accéder à au moins une unité de mémorisation de la ressource portable et comprend des moyens d'exécution configurés pour exécuter au moins une application mémorisée dans l'unité de mémorisation de la ressource portable.

8. Procédé de communication dans un aéronef (21) comprenant un terminal d'aéronef (24, 34, 51) relié à au moins une unité d'entrée/sortie (22, 23, 31, 32, 33, 52) et à un réseau avionique (55) de l'aéronef, le procédé comprenant une étape de connexion d'une ressource portable (25, 35, 54) au terminal d'aéronef au moyen d'une connexion réseau (36), une étape d'interaction à l'aide de ladite au moins une unité d'entrée/sortie avec l'ensemble formé par le terminal d'aéronef et la ressource portable, **caractérisé en ce qu'**il comporte une étape d'accès, par le terminal d'aéronef, à au moins une unité de mémorisation de la ressource portable et une étape d'exécution, à l'aide de moyens d'exécution du terminal d'aéronef, d'au moins une application mémorisée dans l'unité de mémorisation de la ressource portable.

## Claims

1. A system for communication in an aircraft (21), the system comprising an aircraft terminal (24, 34, 51) connected to at least one input/output unit (22, 23, 31, 32, 33, 52) and to an avionic network (55) of the aircraft and comprising a portable resource (23, 35, 54) connected to the aircraft terminal by a network connection (36), the said at least one input/output unit being capable of interacting with the group formed by the aircraft terminal and the portable resource, **characterized in that** the aircraft terminal is configured for accessing at least one memory unit of the portable resource and comprises execution means configured for executing at least one application stored in memory in the memory unit of the portable resource.

2. A system according to claim 1, **characterized in that** the network connection between the aircraft terminal and the portable resource is an Ethernet connection.

3. A system according to claim 1, **characterized in that** the network connection between the aircraft terminal and the portable resource is a USB connection.

4. A system according to one of claims 1 to 3, **characterized in that** the said portable resource is a portable computer that makes all or part of the storage memory contained in the portable computer available to the said aircraft terminal.

5. A system according to one of claims 1 to 3, **characterized in that** the said portable resource is a memory medium.

6. An aircraft comprising an aircraft communication system according to any one of claims 1 to 5.

7. An aircraft terminal (24, 34, 51) connected to at least one input/output unit (22, 23, 31, 32, 33, 52) and to an avionic unit (55) of an aircraft (21) comprising a network connection means (36) capable of connecting a portable resource (23, 35, 54), the said at least one input/output unit being capable of interacting with the group formed by the aircraft terminal and the portable resource, **characterized in that** the aircraft terminal comprises access means configured for accessing at least one memory unit of the portable resource and comprises execution means configured for executing at least one application stored in memory in the memory unit of the portable resource.

8. A method of communication in an aircraft (21) comprising an aircraft terminal (24, 34, 51) connected to at least one input/output unit (22, 23, 31, 32, 33, 52) and to an avionic unit (55) of the aircraft, the method comprising a step of connecting a portable resource (23, 35, 54) to the aircraft terminal by means of a network connection (36), a step of interacting, using said at least one input/output unit, with the group formed by the aircraft terminal and the portable resource, **characterized in that** it comprises a step of accessing, by the aircraft terminal, at least one memory unit of the portable resource and a step of executing, using execution means of the aircraft terminal, at least one application stored in memory in the memory unit of the portable resource.

## Patentansprüche

1. Kommunikationssystem in einem Luftfahrzeug (21), wobei das System einen Luftfahrzeug-Terminal (24, 34, 51) umfasst, der mit mindestens einer Eingangs-/Ausgangs-Einheit (22, 23, 31, 32, 33, 52) und mit einem Avioniknetz (55) des Luftfahrzeugs verbunden ist und eine tragbare Ressource (25, 35, 54) umfasst, die mit dem Luftfahrzeug-Terminal durch eine Netzverbindung (36) verbunden ist, wobei die mindestens eine Eingangs-/Ausgangs-Einheit dafür ausgelegt ist, mit der von dem Luftfahrzeug-Terminal und der tragbaren Ressource gebildeten Einheit zu interagieren, **dadurch gekennzeichnet, dass** der Luftfahrzeug-Terminal konfiguriert ist, um auf mindestens eine Speichereinheit der tragbaren Ressource zuzugreifen, und Ausführungsmittel umfasst, die konfiguriert sind, um mindestens eine in der Speichereinheit der tragbaren Ressource gespeicherte Anwendung auszuführen.

2. System nach Anspruch 1, **dadurch gekennzeichnet, dass** die Netzverbindung zwischen dem Luftfahrzeug-Terminal und der tragbaren Ressource eine Ethernet-Verbindung ist.

3. System nach Anspruch 1, **dadurch gekennzeichnet, dass** die Netzverbindung zwischen dem Luftfahrzeug-Terminal und der tragbaren Ressource eine USB-Verbindung ist.

4. System nach einem der Ansprüche 1 bis 3, **dadurch gekennzeichnet, dass** die tragbare Ressource ein tragbarer Rechner ist, der dem Luftfahrzeug-Terminal den in dem tragbaren Rechner enthaltenen Speicher ganz oder teilweise zur Verfügung stellt.

5. System nach einem der Ansprüche 1 bis 3, **dadurch gekennzeichnet, dass** die tragbare Ressource ein Speicher-Support ist.

6. Luftfahrzeug, umfassend ein Kommunikationssystem nach einem der Ansprüche 1 bis 5.

7. Luftfahrzeug-Terminal (24, 34, 51), der mit mindestens einer Eingangs-/Ausgangs-Einheit (22, 23, 31, 32, 33, 52) und mit einem Avioniknetz (55) eines Luftfahrzeugs (21) verbunden ist, das ein Netzverbindungsmittel (36) umfasst, das eine tragbare Ressource (25, 35, 54) verbinden kann, wobei die mindestens eine Eingangs-/Ausgangs-Einheit mit der von dem Luftfahrzeug-Terminal und der tragbaren Ressource gebildeten Einheit interagieren kann, **dadurch gekennzeichnet, dass** der Luftfahrzeug-Terminal Zugriffsmittel umfasst, die konfiguriert sind, um auf mindestens eine Speichereinheit der tragbaren Ressource zuzugreifen, und Ausführungsmittel umfasst, die konfiguriert sind, um mindestens eine in der Speichereinheit der tragbaren Ressource gespeicherte Anwendung auszuführen.

8. Kommunikationsverfahren in einem Luftfahrzeug (21), umfassend einen Luftfahrzeug-Terminal (24, 34, 51), der mit mindestens einer Eingangs-/Ausgangs-Einheit (22, 23, 31, 32, 33, 52) und mit einem Avioniknetz (55) des Luftfahrzeugs verbunden ist, wobei das Verfahren einen Schritt der Verbindung einer tragbaren Ressource (35, 35, 54) mit dem Luftfahrzeug-Terminal mit Hilfe einer Netzverbindung (36), einen Schritt der Interaktion mit Hilfe der mindestens einen Eingangs-/Ausgangs-Einheit mit der von dem Luftfahrzeug-Terminal und der tragbaren Ressource gebildeten Einheit umfasst, **dadurch gekennzeichnet, dass** es einen Schritt des Zugreifens auf mindestens eine Speichereinheit der tragbaren Ressource durch den Luftfahrzeug-Terminal und einen Schritt der Ausführung mindestens einer in der Speichereinheit der tragbaren Ressource gespeicherten Anwendung mit Hilfe von Ausführungsmitteln des Luftfahrzeug-Terminals umfasst.
